Europäisches Patentamt

European Patent Office

Office européen des brevets

(11) Numéro de publication: **0 335 753 B1**

(12) **FASCICULE DE BREVET EUROPEEN**

(45) Date de publication de fascicule du brevet: **11.05.94**   (51) Int. Cl.⁵: **G01S 13/68**, G01S 13/44

(21) Numéro de dépôt: **89400191.6**

(22) Date de dépôt: **24.01.89**

(54) **Radar pour la correction de tir d'artillerie.**

(30) Priorité: **29.01.88 FR 8801038**

(43) Date de publication de la demande:
**04.10.89 Bulletin 89/40**

(45) Mention de la délivrance du brevet:
**11.05.94 Bulletin 94/19**

(84) Etats contractants désignés:
**BE DE GB IT**

(56) Documents cités:
**FR-A- 2 402 971**
**US-A- 4 042 927**
**US-A- 4 052 721**

(73) Titulaire: **LMT RADIO PROFESSIONNELLE**
**46-47, Ouai Alphonse Le Gallo**
**F-92103 Boulogne-Billancourt(FR)**

(72) Inventeur: **Fourdan, Louis**
**THOMSON-CSF**
**SCPI**
**19, avenue de Messine**
**F-75008 Paris(FR)**

(74) Mandataire: **Benoit, Monique et al**
**THOMSON-CSF**
**SCPI**
**B.P. 329**
**50, rue Jean-Pierre Timbaud**
**F-92402 Courbevoie Cédex (FR)**

EP 0 335 753 B1

Rank Xerox (UK) Business Services
(3.10/3.09/3.3.3)

## Description

La présente invention concerne un radar, notamment pour la correction de tir d'artillerie.

La correction de tir d'obus (ou de roquettes) nécessite une appréciation préalable de l'écart entre l'objectif visé et l'explosion d'obus. Pour déterminer l'écart angulaire entre l'objectif visé et l'explosion d'obus, on emploie couramment une méthode d'écartométrie basée sur l'utilisation d'un radar du type "monopulse" c'est-à-dire dont l'antenne possède deux diagrammes distincts et complémentaires : un diagramme somme $\Sigma$, qui est le diagramme habituel, c'est-à-dire avec un maximum de gain dans l'axe de l'antenne, et un diagramme différence $\Delta$ ayant par contre un gain nul suivant ce même axe, et dont la phase par rapport à $\Sigma$ change de signe de part et d'autre de cet axe. Le rapport $\frac{\Delta}{\Sigma}$ entre les amplitudes des signaux réfléchis par une cible déterminée, obtenus respectivement sur les voies $\Delta$ et $\Sigma$ correspondantes, est dans une certaine mesure représentatif de l'écart angulaire entre cette cible et l'axe de l'antenne.

Si cette méthode d'écartométrie donne de bons résultats appliquée à la poursuite d'un objectif, elle présente cependant un inconvénient majeur dans le cas de la mesure de l'écart entre l'explosion d'obus et l'objectif visé, qui est que le rapport $\frac{\Delta}{\Sigma}$ n'est représentatif du décalage angulaire que dans une zone limitée du diagramme $\Delta$ où celui-ci est linéaire.

La présente invention permet notamment d'éviter cet inconvénient.

Une autre méthode, connue par exemple du document FR-A-2 402 971 consiste à comparer les signaux reçus par le radar lorsque l'antenne effectue un balayage dans une zone limitée autour d'une position centrale à un ensemble de signaux de référence représentant les réponses attendues de cibles virtuelles régulièrement espacées à l'intérieur de l'espace contrôlé.

La présente invention a pour objet un radar, notamment pour la correction de tir d'artillerie, tel que défini dans les revendications.

D'autres objets et caractéristiques de l'invention apparaîtront plus clairement à la lecture de la description suivante d'un exemple de réalisation, faite en relation avec les dessins ci-annexés dans lesquels :

- la figure 1 est un schéma montrant le traitement effectué en réception dans un radar suivant l'invention ;
- les figures 2a, 2b, 2c sont des diagrammes illustrant les opérations de corrélation effectuées dans un radar suivant l'invention.

On décrira plus particulièrement l'invention dans le cadre de son application à un radar de surveillance du sol du type "pulse Doppler".

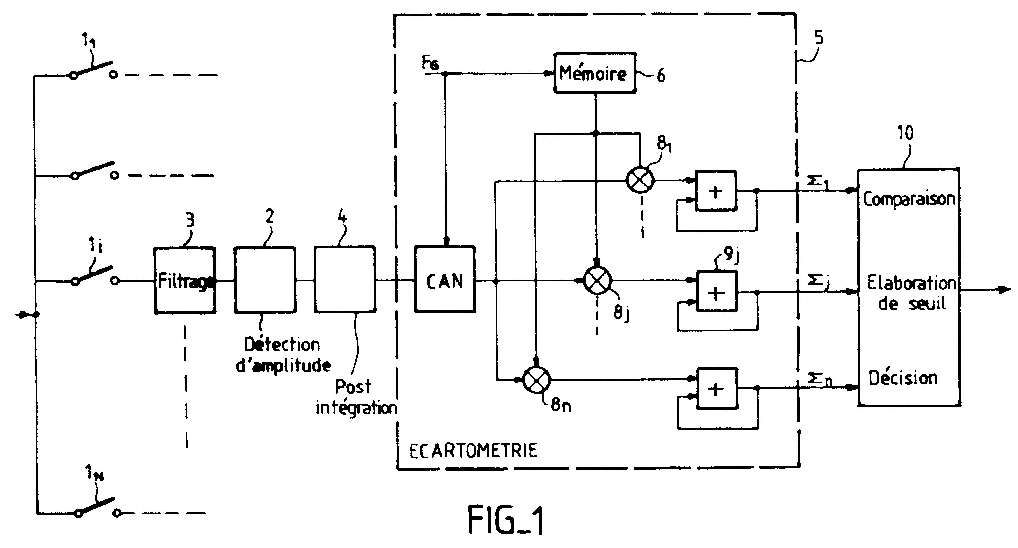

Le traitement de signal effectué en réception est représenté sur la figure 1.

Le signal vidéo bipolaire issu d'un récepteur (non représenté sur cette figure) est appliqué à un ensemble de sélecteurs distance $1_i$, permettant d'effectuer simultanément en parallèle le même traitement sur les différentes cellules de résolution en distance du radar ; pour simplifier, seul le traitement effectué après le sélecteur distance $1_i$ a été représenté sur la figure 1.

Ce traitement comporte une détection d'amplitude (2) précédée d'un filtrage (3) "anti-fouillis" et Doppler, et suivie d'une post intégration (4).

La mesure d'écartométrie entre l'objectif visé et l'explosion d'obus est réalisée au moyen d'un dispositif d'écartométrie 5 dont le principe suppose un balayage d'antenne en gisement dans une zone limitée $\Delta G$ autour d'une position centrale $G_O$ coïncidant avec l'objectif visé.

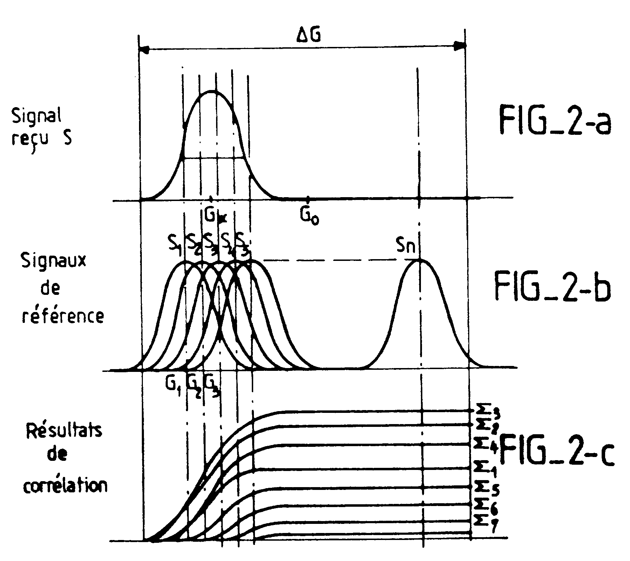

Le détecteur d'amplitude 2 est un détecteur linéaire. La forme du signal issu de ce détecteur, correspondant à une cible, en l'occurrence une explosion d'obus, ayant un azimut $G_x$ (à déterminer) est représentée sur la figure 2a. Ce signal présente une modulation d'amplitude définie par la forme du diagramme d'antenne.

Le signal reçu est comparé à "n" signaux dits "de référence", représentés sur la figure 2b, et correspondant aux signaux qui seraient reçus de cibles régulièrement espacées en gisement ($G_1$, $G_2$ ... $G_n$) à l'intérieur de la zone $\Delta G$ balayée.

Dans le mode de réalisation qui est maintenant décrit, cette comparaison est réalisée par corrélation, elle-même effectuée en numérique, la réalisation pourrait aussi bien se faire avec des circuits analogiques.

La forme des signaux de référence, qui est connue dès lors qu'est connue celle du diagramme d'antenne, est emmagasinée dans une mémoire 6, sous la forme d'échantillons numérisés de ces signaux, espacés d'une période d'échantillonnage en gisement $T_G$, égale par exemple à un multiple, entier ou non, de la période de répétition d'impulsions du radar.

Le signal reçu S issu du détecteur d'amplitude linéaire 2 est numérisé dans un échantillonneur-codeur 7, à la même fréquence d'échantillonnage $F_G = 1/T_G$.

Chaque échantillon du signal reçu est multiplié dans "n" multiplieurs $8_j$, respectivement avec l'échantillon de même rang de l'un des "n" signaux de référence $S_j$ (avec $1 \leq j \leq n$) lu dans la mémoire 6. Les résultats de multiplication obtenus pour les échantillons successifs relativement à la zone $\Delta G$ balayée sont accumulés dans "n" accumulateurs $9_j$.

Les "n" résultats de corrélation, dont la forme est montrée sur la figure 2c, obtenus en sortie des

"n" accumulateurs $9_j$, sont ensuite comparés, en vue de déterminer le résultat $\Sigma_j$ ayant la plus forte valeur, auquel cas le gisement $G_x$ recherché est représenté avec le plus de précision par le gisement correspondant $G_j$. Dans l'exemple représenté sur la figure 2, il s'agit du gisement $G_3$.

Les "n" résultats de corrélation sont par ailleurs utilisés pour élaborer un seuil auquel est ensuite comparé le résultat $\Sigma_j$ précédemment retenu, afin de réaliser l'opération de décision classique intervenant dans tout récepteur radar.

Plus précisément, ce seuil S est élaboré en effectuant une moyenne des "n" résultats de corrélation, puis un produit de cette moyenne par un coefficient "k", déterminé de façon classique par simulation ou expérimentation.

Ces opérations de comparaison des n résultats de corrélation, d'élaboration du seuil et de décision ont été réunies dans un même dispositif 10.

Il serait aussi possible d'inverser l'ordre des opérations de comparaison des résultats de corrélation et de décision par rapport au seuil ; dans ce cas, chaque résultat de corrélation devrait être comparé par rapport au seuil.

Le traitement ainsi décrit est réalisé pour chacune des voies distance sélectionnées par les N sélecteurs distance $1_i$. La mémoire 6 peut être commune à ces différentes voies, auquel cas un adressage supplémentaire en distance doit être prévu.

Les résultats (recherche du résultat de corrélation le plus élevé et comparaison par rapport au seuil) pour chacune des voies distance sont à chaque fois obtenus en fin de balayage de la zone $\Delta G$ à contrôler. Ces résultats peuvent être visualisés à l'intérieur d'une grille distance-gisement sur un écran de visualisation.

Chaque fin de balayage, de droite à gauche ou de gauche à droite, s'accompagne d'une remise à zéro des accumulateurs. Les résultats relatifs à plusieurs balayages successifs peuvent être maintenus simultanément sur l'écran de visualisation de manière à faciliter la correction de tir.

**Revendications**

1. Radar, notamment pour la correction de tir d'artillerie, comportant des moyens pour assurer un balayage d'antenne en gisement dans une zone limitée ($\Delta G$) autour d'une position centrale coïncidant avec l'objectif visé et des moyens (5) pour comparer les signaux reçus à un ensemble de signaux de référence représentant les réponses attendues de cibles virtuelles régulièrement espacées en gisement à l'intérieur de la zone ($\Delta G$), la comparaison étant effectuée par corrélation, caractérisé en ce qu'il comporte en outre des moyens (10) pour comparer le résultat de corrélation ayant la plus forte valeur à un seuil élaboré à partir de la moyenne des résultats de corrélation relatifs aux différents signaux de référence, la corrélation étant réalisée après échantillonnage en gisement des signaux reçus, par multiplication de l'amplitude des échantillons des signaux reçus par l'amplitude des échantillons de même rang des signaux de référence, préalablement stockés dans une mémoire, puis accumulation des résultats de multiplication relatifs aux échantillons successifs sur la zone ($\Delta G$) considérée, et ceci pour chacun des signaux de référence.

2. Radar selon la revendication 1, caractérisé en ce qu'il comporte des moyens (2) pour assurer avant comparaison une détection linéaire d'amplitude des signaux reçus.

3. Radar selon l'une des revendications précédentes, caractérisé en ce que ce radar est à impulsions et en ce que le même traitement est effectué pour les différentes cellules de résolution en distance de ce radar.

**Claims**

1. Radar, especially for correcting artillery firing, including means for carrying out antenna scanning in azimuth in a limited region ($\Delta G$) around a central position coinciding with the target aimed at, and means (5) for comparing the signals received with a set of reference signals representing the expected responses from virtual targets which are regularly spaced in azimuth within the region ($\Delta G$), the comparison being performed by correlation, characterized in that it further includes means (10) for comparing the correlation result having the highest value with a threshold derived from the mean of the correlation results relating to the various reference signals, the correlation being performed after sampling of the received signals, in azimuth, by multiplication of the amplitude of the samples of the signals received by the amplitude of the samples of the same rank of the reference signals, previously stored in a memory, then accumulation of the multiplication results relating to the successive samples over the region ($\Delta G$) in question, for each of the reference signals.

2. Radar according to Claim 1, characterized in that it includes means (2) for carrying out linear amplitude detection of the received signals, before comparison.

3. Radar according to one of the preceding claims, characterized in that this radar is pulsed and in that the same processing is performed for the various range resolution cells of this radar.

**Patentansprüche**

1. Radargerät, insbesondere für die Schußkorrektur bei der Artillerie, mit Mitteln, um eine Antennenbewegung in Azimutrichtung und in einer begrenzten Zone (ΔG) um eine zentrale mit dem angepeilten Gegenstand koinzidierende Lage zu gewährleisten, und mit Mitteln (5), um die empfangenen Signale mit einer Gruppe von Bezugssignalen zu vergleichen, die die von gleichmäßig in Azimutrichtung innerhalb der Zone (ΔG) verteilten virtuellen Ziele erwarteten Impulsantworten repräsentieren, wobei der Vergleich durch Korrelation erfolgt, dadurch gekennzeichnet, daß es weiter Mittel (10) aufweist, um das Korrelationsresultat größten Werts mit einer Schwelle zu vergleichen, die ausgehend von dem Mittelwert der die verschiedenen Bezugssignale betreffenden Korrelationsresultate erarbeitet wurde, wobei die Korrelation nach der Tastung der empfangenen Signale in Azimutrichtung durch Multiplizieren der Amplitude der Tastproben der empfangenen Signale mit der Amplitude der Tastproben gleichen Rangs der vorher in einem Speicher gespeicherten Bezugssignale erfolgt, worauf die Produkte bezüglich der in der betrachteten Zone (ΔG) aufeinanderfolgenden Tastproben für jedes der Bezugssignale akkumuliert werden.

2. Radargerät nach Anspruch 1, dadurch gekennzeichnet, daß es Mittel (2) aufweist, um vor dem Vergleich eine lineare Erfassung der Amplitude der empfangenen Signale durchzuführen.

3. Radargerät nach einem der vorhergehenden Ansprüche, dadurch gekennzeichnet, daß es ein Impulsradargerät ist und daß eine gleiche Verarbeitung für alle verschiedenen Abstandsauflösungszellen dieses Radargeräts durchgeführt wird.

FIG_1

Signal
reçu S
FIG_2-a

Signaux
de
référence
FIG_2-b

Résultats
de
corrélation
FIG_2-c